# EUROPÄISCHE PATENTSCHRIFT

(11) **EP 3 576 521 B1**
(45) Veröffentlichungstag und Bekanntmachung des Hinweises auf die Patenterteilung: **06.01.2021**
(21) Anmeldenummer: 18707231.9
(22) Anmeldetag: 25.01.2018
(51) Int. Cl.: A01K 27/00

(54) **HUNDEHALSBAND-LEINENKOMBINATION**
DOG COLLAR AND LEASH COMBINATION
COMBINAISON COLLIER ET LAISSE POUR CHIENS

(30) Priorität: 02.02.2017 DE 202017100557 U
(43) Veröffentlichungstag der Anmeldung: 11.12.2019
(73) Patentinhaber: Falkenberg, Walburga, 21224 Rosengarten (DE)
(72) Erfinder: FALKENBERG, Reto, 21224 Rosengarten (DE)
(74) Vertreter: Hansen, Jochen
(86) Internationale Anmeldenummer: PCT/DE2018/100063
(87) Internationale Veröffentlichungsnummer: WO 2018/141334

(56) Entgegenhaltungen:
- DE-C- 384 432
- US-A1- 2009 255 486
- US-A1- 2014 116 354

## Beschreibung

Die Erfindung betrifft eine Hundehalsband-Leinenkombination mit einem Halsband und einer in einem Gehäuse mit Auf- und Abrollmechanismus vorgehaltenen Leine, wobei die Leine im Gehäuse gegen eine Federkraft abwickelbar ist und ein äußeres Ende der Leine einen Griff aufweist, wobei das Halsband (1) zwei freie Enden (11, 12) hat, wobei am ersten Ende (11) die Leine (2) und am zweiten Ende (12) eine Öse (13), durch die die Leine (2) hindurchgeführt ist, vorgesehen sind. Nachfolgend wird klargestellt, dass es sich um eine Halsband-Leinenkombination für Tiere, insbesondere Hunde, jedoch nicht auf Hunde beschränkt, handelt. Der Begriff "Hundehalsband-Leinenkombination" soll daher erweiternd auch für andere Tiere, die an Halsbändern mit einer Leine geführt werden, wie beispielsweise teilweise Katzen oder dergleichen gelten.

Selbstaufrollende Hundeleinen an einem Hundehalsband sind in unterschiedlicher Ausgestaltung bekannt. In der DE 27 042 28 A1 ist beispielsweise eine selbstaufrollende Hundeleine beschrieben, die in einem Gehäuse mittels einer Stahlfeder aufwickelbar ist. Dabei ist es auch vorgesehen, dass die ausgezogene Hundeleine verriegelt und durch eine gesonderte Taste entriegelt werden kann.

Ferner ist aus den DE 77 36 528 U1 ein Hundehalsband bekannt, an dem ein Gehäuse aus Kunststoff oder Metall angebracht ist, in der eine Hundeleine mittels einer Spiralzugfeder selbstständig aufrollbar untergebracht ist. Ähnliches zeigt die DE 80 31 227 U1 bzw. die DE 91 12 680 U1.

Die US 7,174,857 B2 beschreibt ein Tierhalsband mit einer integrierten, aus einem Gehäuse ausziehbaren Halteleine.

Eine etwas andere Ausgestaltung zeigt die DE 10 2004 038 935 A1, bei der einen Hundehalsband eine integrierte Hundeleine aufweist, die um das Hundehalsband gewickelt ist.

Eine weitere Variante eines Hundehalsbandes zeigt die DE 100 12 699 C1 mit einem nach innen gerichteten Innenband und einem außen darüber geführten Außenband, wobei das Außenband gegen eine Rückstellkraft elastisch verlängerbar oder ausziehbar ausgebildet ist. Somit wird eine Schlaufe bei Bedarf von zwei Seiten aus dem Halsband herausgezogen, die ein Führen des Hundes erlaubt.

Die US 2009/0255486 A1 beschreibt ein Hundehalsband mit einstellbarer, aber fester Halsbandweite, auf dem ein kleines Gehäuse für eine sich selbsttätig aufwickelnde Leine angeordnet ist.

Nachteilig ist jedoch, dass die bekannten Hundehalsbänder mit integrierter, ausrollbarer Hundeleine zunächst um den Hals des Tieres in der üblichen Weise mit einer angepassten, festen Halsweite angelegt werden müssen. Ferner ist in den vorgenannten Hundeleinen eine Zusammenziehfunktion nicht vorgesehen.

Die DE 384432 beschreibt ein Hundehalsband mit einer sich selbsttätig aufwickelnden Leine, bei der die unter Federspannung gehaltene Leine im Halsband integriert ist und kein gesondertes Gehäuse aufweist. Ferner ist das Hundehalsband als Folgehalsband beim Lösen einer Verbindungsschnalle ausgebildet.

Die US 2014/0116354 A1 zeigt ein Hundehalsband mit einer sich selbsttätig in einem gesonderten Gehäuse aufwickelnden Leine, bei der in einer Ausführungsform ebenfalls eine Zusammenziehfunktion des Halsbandes verwirklicht ist.

Aufgabe der Erfindung ist es daher, die Aufrollfunktion für die an der am Hundehalsband angeordnete, aufrollbare Hundeleine so auszubilden, dass ein leichtes Anlegen des Hundehalsbandes und eine begrenzte Zusammenziehfunktion integriert wird.

Gelöst wird diese Aufgabe mit einer Hundehalsband-Leinenkombination gemäß Anspruch 1. Dadurch, dass das Halsband zwei freie Enden hat, ist es nicht fest um den Tierhals geschlossen, sondern kann durch Herausziehen der Leine aus dem Gehäuse weiter geöffnet werden. Dies ist möglich, da am ersten Ende das Gehäuse für die Leine und somit die Leine bevorratet ist und am zweiten Ende eine Öse vorgesehen ist, durch die der Griff der Leine durchgeführt ist. Bei dieser Konstellation kann die Leine auch am Griff von einer Person ergriffen und aus dem Gehäuse bis zur maximalen Länge herausgezogen werden. In diesem Fall fungiert die Hundehalsband-Leinenkombination wie ein herkömmliches Halsband, an dem eine Leine befestigt ist, wobei allerdings keine feste Verbindung zwischen den beiden Enden des Halsbandes, also keine feste Halsumschlingung sondern eine variable Schlaufe vorliegt. Dabei weisen die beiden Enden des Halsbandes bei stirnseitiger Annäherung gegenseitige Stützelemente auf. Somit wird beim Ziehen an der Leine, egal ob vom Tier oder vom Tierhalter, das Halsband nur soweit mit seinen beiden Enden aufeinander zubewegt, bis sich die Stützelemente an den beiden Enden des Halsbandes gegenseitig abstützen. Damit ist gewährleistet, dass das Halsband nicht enger zusammengezogen und somit das Tier nicht beeinträchtigt oder gar verletzt wird.

In weiterer Ausgestaltung ist das Halsband in seiner Länge einstellbar ausgebildet. Damit kann das Halsband auf den jeweiligen Umfang des Tierhalses eingestellt werden. Da sich das Halsband bei der hier gegebenen Konstruktion gegen die Federkraft des Aufrollmechanismus aufweiten kann, kann das Halsband auch etwas enger für das Tier eingestellt werden, sodass bei Benutzung der Hundehalsband-Leinenkombination bei einem starken Zug an der Leine eine leichte Würgefunktion durch das Zusammenziehen des Halsbandes auf seine minimale Umfangslänge erreicht wird. Das Halsband würde sich bei normalen Situationen lediglich unter leichtem Federzug um den Tierhals geschlossen halten.

Um den Tragekomfort der Hundehalsband-Leinenkombination für das Tier weiter zu verbessern, kann die Federkraft zum Aufwickeln der Leine verstellbar ausgebildet werden. Damit ist es möglich, die Federkraft so einzustellen, dass das Halsband mit ausreichend zusammenziehender Wirkung um den Tierhals schließt, ohne dabei das Tier zu stark zu beeinträchtigen.

Dadurch, dass am Auf- und Abrollmechanismus eine Arretierung vorgesehen ist, mit der die Leine in der jeweiligen Länge arretiert werden kann, kann die Leine in jeder Auszugsstellung arretiert werden. Wird die Leine im vollständig aufgerollten Zustand arretiert, liegt quasi ein herkömmliches Hundehalsband in starrer, geschlossener Form vor, das sich an den Hals des Tieres anlegt. Wird beispielsweise die Leine vollständig abgerollt und dann arretiert, ergibt sich eine typische Hundeleinensituation, bei dem der Hundehalter das Tier bequem führen kann. Einziger Unterschied zu bisherigen Hundehalsbändern liegt darin, dass das Halsband lediglich eine aufweitbare Schleife um den Hals bildet, wie dies vorangehend schon beschrieben ist.

Wenn die beiden Enden des Halsbandes Koppelmittel zum Verbinden der beiden Enden aufweisen, kann das Halsband durch Koppeln der beiden Enden durch das Koppelmittel in ein herkömmliches, starr um den Hals des Tieres gelegtes Halsband umgewandelt werden. Bevorzugt besteht das Koppelmittel aus einem Karabinerhaken am ersten Ende und der Öse am zweiten Ende des Halsbandes. In diesem Falle wird der Karabinerhaken in die Öse am anderen Ende des Halsbandes eingehakt, sodass das Halsband nicht mehr durch die durch die Öse hindurchgeleitete Leine aufgeweitet werden kann.

Dadurch, dass der Auf- und Abrollmechanismus in dem Gehäuse eine spiralförmige Aufrollfeder und eine drehbar gehalterte Kassette für die auf- und abwickelbare Leine aufweist, wird ein zuverlässiger Auf- und Abrollmechanismus für die Leine in dem Gehäuse bereitgestellt.

Um eine flexible, leicht aufwickelbare und gleichfalls stabile Leine vorzuhalten, ist die Leine aus einem geflochtenen Kernmantelseil, bevorzugt aus Nylon, gebildet. Wenn das Halsband aus einem Textilgewebeflachband, bevorzugt aus Nylon, gebildet ist, wird ein für das Tier gut tragbares und stabiles Halsband angegeben.

Wenn am äußeren Ende der Leine oder am Griff ein Befestigungsmittel vorgesehen ist, um dieses auf dem Halsband zu fixieren, wird verhindert, dass das äußere Ende der Leine, der Griff oder eine am äußeren Ende der Leine angeordnete Schlaufe frei von der Hundehalsband-Leinenkombination herabbaumelt und sich der Hund mit seiner herabbaumelnden Leine/Griff an irgendwelchen Gegenständen verfangen könnte. Für den Nutzer ist der Zugriff zum äußeren Leinenende bzw. Griff oder Griffschlaufe jederzeit gewährleitet. Bevorzugt ist das Befestigungsmittel eine Magnetkupplung.

Nachfolgend wird ein Ausführungsbeispiel der Erfindung anhand der beiliegenden Zeichnung detailliert beschrieben.

Darin zeigt:
- Fig. 1: eine räumliche Ansicht einer Hundehalsband-Leinenkombination in einem ersten Ausführungsbeispiel und
- Fig. 2: eine räumliche Ansicht einer Hundehalsband-Leinenkombination in einem zweiten Ausführungsbeispiel.

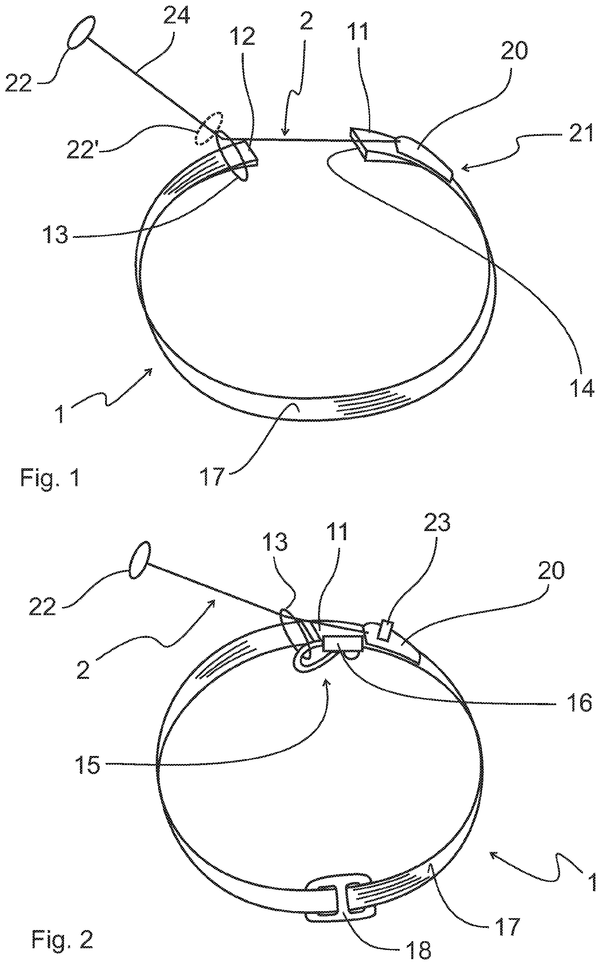

In Fig. 1 ist eine Hundehalsband-Leinenkombination mit einem Halsband 1 und einer in einem Gehäuse 20 vorgehaltenen Leine 2 in räumlicher Ansicht dargestellt. Das Halsband 1 besteht aus einem Textilgewebeflachband 17, das um den Hals eines Tieres, insbesondere Hund, der hier nicht dargestellt ist, umlegbar ist. Das Halsband 1 weist zwei Enden auf, nämlich ein erstes Ende 11, nahe dem das Gehäuse 20 für die Leine 2 angeordnet ist, und ein zweites Ende 12, an dem eine Öse 13 angeordnet ist, durch die die Leine 2 hindurchgeführt ist.

Die beiden Enden 11, 12 weisen zueinander passende Stützelemente 14 auf, sodass beim Zusammenziehen der beiden Enden 11, 12 diese Stützelemente 14 sich gegenseitig abstützend aneinander legen, wie dies in Fig. 2 dargestellt ist.

Im Gehäuse 20 für die Leine 2 ist ein Auf- und Abrollmechanismus 21 mit einer nicht näher dargestellten spiralförmigen Feder und einer drehbaren Kassette für die aufzurollende Leine 2 untergebracht. Das freie Ende der Leine 2 ist mit einem Griff 22 ausgestattet, der einerseits zum bequemen Festhalten der Leine 2 dient und der andererseits verhindert, dass die Leine 2 durch die Öse 13 vollständig durchrutschen kann. Die Leine 2 besteht aus einem Kernmantelseil 24 aus Nylonfäden.

In Fig. 2 ist eine Hundehalsband-Leinenkombination in einem zweiten Ausführungsbeispiel räumlich dargestellt, wobei im Vergleich zur Ausgestaltung gemäß Fig. 1 funktionsgleiche Bauteile mit gleichen Bezugszeichen bezeichnet sind. In Fig. 2 sind - wie bereits vorangehend ausgeführt - die beiden Enden 11, 12 des Halsbandes 1 mit ihren Stützelementen 14 aneinander liegend dargestellt. Zusätzlich zur Ausgestaltung gemäß Fig. 1 weist die Hundehalsband-Leinenkombination gemäß Fig. 2 ein Koppelmittel 15 auf, das aus einem Karabinerhaken 16, der am ersten Ende 11 des Halsbandes 1 befestigt ist, und die Öse 13, durch die die Leine 2 hindurchgeführt ist, auf. Der Karabinerhaken 16 ist in die Öse 13 eingehakt, sodass das Halsband 1 eine starre Umschlingung des Tierhalses bildet. Um die Umfangslänge des Halsbandes 1 auf den jeweiligen Halsumfang des zu führenden Tieres anpassen zu können, weist das Halsband 1 ein Einstellmittel 18 auf.

Nachfolgend wird die Funktionsweise der Hundehalsband-Leinenkombination anhand der beiden in den Fig. 1 und 2 dargestellten Ausführungsbeispiele beschrieben.

In der Grundstellung liegt die Hundehalsband-Leinenkombination so vor, dass die beiden Enden 11, 12 des Halsbandes 1 mit ihren Stützelementen 14 aneinander liegen und die Leine 2 vom Gehäuse 20 durch die Öse 13 hindurchgeführt ist, wobei direkt an der Öse 13 der Griff 22 der Leine 2 anliegt. Der Federzug von dem Auf- und Abrollmechanismus 21 bewirkt dabei die Lastbeaufschlagung auf die beiden Enden 11, 12 bzw. die Stützelemente 14, wobei das Halsband 1 gegen diese Federaufrollkraft aufdehnbar ist, in dem Leine 2 aus dem Gehäuse 20 herausgezogen wird. In dieser Situation ist die Hundehalsband-Leinenkombination in Fig. 1 mit dem Griff 22' (in gestrichelter Darstellung) dargestellt.

Der Hundehalter kann somit das Halsband 1 beidseitig der Enden 11, 12 anfassen und es gegen die Federrückstellkraft der Leine 2 öffnen (wie in Fig. 1 dargestellt) und das Halsband 1 über den Kopf des Hundes ziehen und somit ordnungsgemäß anlegen. Ergreift nun der Hundehalter den Griff 22' und zieht an der Leine 2, wird weitere Leinenlänge aus dem Gehäuse 20 entgegen der Federkraft des Auf- und Abrollmechanismus 21 abgerollt, sodass die in Fig. 1 mit Griff 22 (nicht gestrichelt) gezeigte Situation besteht. In dieser Situation kann der Hundehalter den Hund bequem an der Leine 2 führen. Lässt der Hundehalter den Griff 22 los, wird die Leine 2 über den Auf- und Abrollmechanismus 21 und die darin vorgesehene Feder aufgerollt, sodass der Griff 22 wieder an der Öse 13 in Position 22' (gestrichelt) anliegt.

In der zweiten Ausführungsform gemäß Fig. 2 ist gegenüber den Funktionalitäten der Ausführungsform gemäß Fig. 1 zusätzlich vorgesehen, dass die beiden Enden 11, 12 des Halsbandes 1 miteinander über das Koppelmittel 15 in Form eines Karabinerhakens 16, der in die Öse 13 einrastbar ist, starr als Halsband 1, den Tierhals umschließend, ausgebildet sind. Ferner weist das Textilgewebeflachband 17 des Halsbandes 1 ein Einstellmittel 18 auf, um den Umfang des Halsbandes 1 genau auf das damit zu versehende Tier anzupassen.

Wenn das Koppelmittel 15 in Form des Karabinerhakens 16 gelöst wird, hat die Hundehalsband-Leinenkombination gemäß Fig. 2 die gleiche Funktionalität wie die entsprechende Ausführungsform gemäß Fig. 1. Bei verbundenen Koppelmittel 15 liegt jedoch ein herkömmliches Hundehalsband 1 mit einer abrollbaren Hundeleine 2 vor. Zusätzlich kann jedoch der Auf- und Abrollmechanismus 21 am Gehäuse 20 durch eine Arretierung 23 in der jeweiligen Stellung der Leine 2 arretiert werden. Beispielsweise kann die Leine 2 mit Durchziehen am Griff 22 vollständig abgerollt und dann die Arretierung 23 verriegelt werden, sodass dann eine herkömmliche Halsband-Hundeleinen-Leinenkombination mit festem Halsband und fester Leine vorliegt. Wird die Arretierung 23 geöffnet und die Leine 2 durch den Aufrollmechanismus 21 wieder in das Gehäuse 20 eingezogen, kann selbstverständlich jede Zwischenposition und auch die vollständig aufgerollte wieder mit der Arretierung 23 arretiert werden.

Vorteilhaft kann somit mit der anmeldungsgemäßen Hundehalsband-Leinenkombination das Hundehalsband leicht durch Aufdehnen und über den Kopf ziehen dem Tier angelegt werden. Der Hund trägt dabei mit seinem Halsband im Gehäuse 20 die Leine 2 stets bei sich. Durch Ergreifen des Griffes 22 kann der Hundehalter unverzüglich die Leine 2 abrollen, sodass ihm dann die bequeme Führung des Hundes erlaubt ist. Durch die zusätzlichen Funktionen der Arretierung 23 können verschiedene Längen der Hundeleine 2 fixiert oder gar die Stellung mit an der Öse 13 anliegendem Griff 22 arretiert werden, womit quasi ein herkömmliches Halsband (das nicht gegen die Rückstellkraft der Leine aufweitbar ist) bereitgestellt wird. Durch Lösen der Arretierung 23 wird dann unverzüglich die besondere Funktion wieder aktiviert. In weiterer Ausbildung kann durch das Koppelmittel 15 eine starre Funktion des Halsbandes 1 erzeugt werden, wobei gleichwohl die Leine 2 gegen die Federkraft herausziehbar ist. In weiterer Ausgestaltung kann dabei auch eine Arretierung 23 der Leine 2 erfolgen, sodass dann die bekannten Funktionen von Hundehalsband und fester Hundeleine vorliegen.

### Bezugszeichenliste

- 1: Halsband
- 11: erstes Ende
- 12: zweites Ende
- 13: Öse
- 14: Stützelement
- 15: Koppelmittel
- 16: Karabinerhaken
- 17: Textilgewebeflachband
- 18: Einstellmittel

- 2: Leine
- 20: Gehäuse
- 21: Auf- und Abrollmechanismus
- 22: Griff
- 23: Arretierung
- 24: Kernmantelseil

## Patentansprüche

1. Hundehalsband-Leinenkombination mit einem Halsband (1) und einer in einem Gehäuse (20) mit Auf- und Abrollmechanismus (21) vorgehaltenen Leine (2), wobei die Leine (2) im Gehäuse (20) gegen eine Federkraft abwickelbar ist und ein äußeres Ende der Leine (2) einen Griff (22) aufweist, wobei das Halsband (1) zwei freie Enden (11, 12) hat, wobei am ersten Ende (11) die Leine (2) und am zweiten Ende (12) eine Öse (13), durch die die Leine (2) hindurchgeführt ist, vorgesehen sind, wobei am ersten Ende (11) das Gehäuse (20) für die Leine (2) vorgesehen ist **dadurch gekennzeichnet, dass** die beiden Enden (11, 12) des Halsbandes (1) bei stirnseitiger Annäherung gegenseitige Stützelemente (14) aufweisen.

2. Hundehalsband-Leinenkombination nach Anspruch 1, **dadurch gekennzeichnet, dass** das Halsband (1) in seiner Länge einstellbar ausgebildet ist.

3. Hundehalsband-Leinenkombination nach Anspruch 1 oder 2, **dadurch gekennzeichnet, dass** die Federkraft zum Aufwickeln der Leine (2) verstellbar ausgebildet ist.

4. Hundehalsband-Leinenkombination nach einem der vorangehenden Ansprüche, **dadurch gekennzeichnet, dass** am Auf- und Abrollmechanismus (21) eine Arretierung (23) vorgesehen ist, mit der die Leine (2) in der jeweiligen Länge arretiert werden kann.

5. Hundehalsband-Leinenkombination nach einem der vorangehenden Ansprüche, **dadurch gekennzeichnet, dass** die beiden Enden (11, 12) des Halsbandes (1) Koppelmittel (15) zum Verbinden der beiden Enden (11, 12) aufweisen.

6. Hundehalsband-Leinenkombination nach Anspruch 5, **dadurch gekennzeichnet, dass** das Koppelmittel (15) aus einem Karabinerhaken (16) am ersten Ende (11) und der Öse (13) am zweiten Ende (12) des Halsbandes (1) besteht.

7. Hundehalsband-Leinenkombination nach einem der vorangehenden Ansprüche, **dadurch gekennzeichnet, dass** der Auf- und Abrollmechanismus (21) in dem Gehäuse (20) eine spiralförmige Aufrollfeder und eine drehbar gehalterte Kassette für die auf- und abwickelbare Leine (2) aufweist.

8. Hundehalsband-Leinenkombination nach einem der vorangehenden Ansprüche, **dadurch gekennzeichnet, dass** die Leine (2) aus einem geflochtenen Kernmantelseil (24), bevorzugt aus Nylon, gebildet ist.

9. Hundehalsband-Leinenkombination nach einem der vorangehenden Ansprüche, **dadurch gekennzeichnet, dass** das Halsband (1) aus einem Textilgewebeflachband (17), bevorzugt aus Nylon, gebildet ist.

10. Hundehalsband-Leinenkombination nach einem der vorangehenden Ansprüche, **dadurch gekennzeichnet, dass** am äußeren Ende der Leine (2) oder am Griff (22) ein Befestigungsmittel vorgesehen ist, um dieses auf dem Halsband (1) zu fixieren.

11. Hundehalsband-Leinenkombination nach Anspruch 10, **dadurch gekennzeichnet, dass** das Befestigungsmittel eine Magnetkupplung ist.

## Claims

1. A dog collar and lead combination having a collar (1) and a lead (2) stored in a housing (20) with a coiling and uncoiling mechanism (21), wherein the lead (2) in the housing (20) can be unwound against a spring force and an outer end of the lead (2) has a handle (22), wherein the collar (1) has two free ends (11, 12), wherein at the first end (11) there is provided the lead (2) and at the second end (12) there is provided an eye (13) through which the lead (2) is passed, wherein the housing (20) for the lead (2) is provided at the first end (11), **characterised in that** the two ends (11, 12) of the collar (1) have reciprocal support elements (14) when their end faces approach one another.

2. A dog collar and lead combination according to claim 1, **characterised in that** the collar (1) is adjustable in length.

3. A dog collar and lead combination according to claim 1 or 2, **characterised in that** the spring force for winding up the lead (2) can be altered.

4. A dog collar and lead combination according to any one of the preceding claims, **characterised in that** a locking means (23) is provided at the coiling and uncoiling mechanism (21), by means of which the lead (2) can be locked at its current length.

5. A dog collar and lead combination according to any one of the preceding claims, **characterised in that** the two ends (11, 12) of the collar (1) have coupling means (15) for connecting the two ends (11, 12).

6. A dog collar and lead combination according to claim 5, **characterised in that** the coupling means (15) consist of a snap hook (16) at the first end (11) and the eye (13) at the second end (12) of the collar (1).

7. A dog collar and lead combination according to any one of the preceding claims, **characterised in that** the coiling and uncoiling mechanism (21) in the housing (20) has a spiral-shaped coiling spring and a rotatably mounted cassette for the windable and unwindable lead (2).

8. A dog collar and lead combination according to any one of the preceding claims, **characterised in that** the lead (2) is formed from a braided kernmantle rope (24), preferably of nylon.

9. A dog collar and lead combination according to any one of the preceding claims, **characterised in that** the collar (1) is formed from a textile fabric flat band (17), preferably of nylon.

10. A dog collar and lead combination according to any one of the preceding claims, **characterised in that** a securing means is provided at the outer end of the lead (2) or at the handle (22), in order to fix this outer end on the collar (1).

11. A dog collar and lead combination according to claim 10, **characterised in that** the securing means is a magnetic coupling.

## Revendications

1. Combinaison collier/laisse pour chien avec un collier (1) et une laisse (2) maintenue dans un boîtier (20) avec un mécanisme d'enroulement et de déroulement (21), la laisse (2) pouvant être déroulée dans le boîtier (20) contre une force de ressort et une extrémité extérieure de la laisse (2) présentant une poignée (22), le collier (1) ayant deux extrémités libres (11, 12), la laisse (2) étant prévue à la première extrémité (11) et un œillet (13) étant prévu à la deuxième extrémité (12), œillet à travers lequel passe la laisse, le boîtier (20) pour la laisse (2) étant prévu à la première extrémité (11), **caractérisé en ce que** les deux extrémités (11, 12) du collier (1) ont des éléments de support mutuel (14) lorsqu'elles se rapprochent l'une de l'autre par des faces frontales.

2. Combinaison collier/laisse pour chien selon la revendication 1, **caractérisée en ce que** le collier (1) est conçu réglable en longueur.

3. Combinaison collier/laisse pour chien selon la revendication 1 ou 2, **caractérisée en ce que** la force de ressort pour enrouler la laisse (2) est conçue réglable.

4. Combinaison collier/laisse pour chien selon l'une des revendications précédentes, **caractérisée en ce qu'**un dispositif de verrouillage (23) est prévu sur le mécanisme d'enroulement et de déroulement (21) avec lequel la laisse (2) peut être verrouillée à la longueur considérée.

5. Combinaison collier/laisse pour chien selon l'une des revendications précédentes, **caractérisée en ce que** les deux extrémités (11, 12) du collier (1) présentent des moyens d'accouplement (15) pour relier les deux extrémités (11, 12).

6. Combinaison collier/laisse pour chien selon la revendication 5, **caractérisée en ce que** les moyens d'accouplement (15) sont constitués d'un mousqueton (16) à la première extrémité (11) et de l'œillet (13) à la deuxième extrémité (12) du collier (1).

7. Combinaison collier/laisse pour chien selon l'une des revendications précédentes, **caractérisée en ce que** le mécanisme d'enroulement et de déroulement (21) dans le boîtier (20) comprend un ressort d'enroulement en spirale et une cassette montée rotative pour la laisse (2) enroulable et déroulable.

8. Combinaison collier/laisse pour chien selon l'une des revendications précédentes, **caractérisée en ce que** la laisse (2) est formée d'une corde à âme gainée tressée (24), de préférence en nylon.

9. Combinaison collier/laisse pour chien selon l'une des revendications précédentes, **caractérisée en ce que** le collier (1) est formé d'une bande de tissu textile plat (17), de préférence en nylon.

10. Combinaison collier/laisse pour chien selon l'une des revendications précédentes, **caractérisée en ce que** des moyens de fixation sont prévus à l'extrémité extérieure de la laisse (2) ou à la poignée (22) pour la fixer au collier (1).

11. Combinaison collier/laisse de chien selon la revendication 10, **caractérisée en ce que** les moyens de fixation sont un accouplement magnétique.
